# EUROPEAN PATENT SPECIFICATION

(11) **EP 1 838 601 B1**
(45) Date of publication and mention of the grant of the patent: **21.01.2009**
(21) Application number: 05842574.5
(22) Date of filing: 14.12.2005
(51) Int. Cl.: B65G 19/02, B31B 5/74, B65B 43/00

(54) **APPARATUS AND METHOD FOR LOADING CARTONS ON CARTON FORMING MACHINES**
VORRICHTUNG UND VERFAHREN ZUM LADEN VON KARTONS AUF KARTONFORMMASCHINEN
APPAREIL ET PROCEDE

(30) Priority: 14.12.2004 US 635910 P
(43) Date of publication of application: 03.10.2007
(73) Proprietor: ELOPAK SYSTEMS AG, 8152 Glattbrugg (CH)
(72) Inventor: ARNETT, David, Wayne, Howell, MI 48832 (US); MILLER, Russell, Paul, Trail, MI 48836 (US); POUBLON, Kenneth, Archie, Taylor, MI 48180 (US); SANDERS, Eric, Thomas, Wayne, MI 48184 (US)
(74) Representative: Burrows, Anthony Gregory
(86) International application number: PCT/GB2005/004822
(87) International publication number: WO 2006/064225

(56) References cited:
- WO-A-95/10408
- US-A- 3 120 089
- US-A- 5 664 400
- US-B1- 6 598 728

## Description

This invention relates generally to a method and apparatus for delivering an article to a receiver, for example for loading a series of partially-formed paperboard cartons in open-ended, rectilinear tube configurations, onto respective arms or mandrels of a rotating turret upon which one end of each carton is then sequentially folded, closed, and sealed as the turret indexes the cartons through various circumferentially-spaced stations in a machine for forming cartons from carton blanks.

Carton forming machines having turrets for indexing partially-formed, open-ended cartons through end folding, closing, and sealing stations are well-known in the art. For example, a carton folding, filling, and sealing machine known as the ELOPAK® P-S50 includes such a turret. The ELOPAK® P-S50 also includes a carton blank magazine that holds a plurality of paperboard carton blanks in flattened form and a feeder that includes suction cups to engage the carton blanks in the magazine and pull them open into open-ended rectilinear tube form. The turret has a plurality of radially-extending arms or mandrels. Each mandrel is shaped to axially receive a partially-formed, open-ended, paperboard carton. The turret is rotatably supported and configured to rotate the mandrels through a plurality of circumferentially-spaced work stations where successive operations are performed to close and seal the bottom ends of cartons supported on the mandrels.

A turret loading device of the ELOPAK® P-S50 includes a loader guide that receives cartons in open-ended rectilinear tube form from the feeder and deposits them over the turret mandrels for transport through the bottom-forming work stations. The turret loading device includes an endless conveyor chain supported on chain guides between an upstream sprocket and a downstream sprocket. A loader motor drives the chain continuously in one sense at a constant velocity by turning the downstream sprocket. The turret loading device of the P-S50 also includes plastics loading fingers that are supported at spaced locations along the chain and extend radially outward from along the chain path in positions where they engage trailing edges of the open-ended cartons to propel the cartons along loader guide rails and onto the respective turret mandrels.

The P-S50 machine requires a highly accurate positional relationship to exist between the loading finger and the trailing edge of the carton, because the finger has to slide accurately past that trailing edge; if the finger leaves contact with that edge too late, there is a risk of damage to that edge, but if the finger leaves contact with that edge too early, the carton is not fully loaded onto the mandrel or rebounds. If this relationship is slightly inaccurate, time-consuming mechanical adjustment, or even reworking of parts, sometimes by trial and error, may be necessary.

As each carton reaches a mounted position on one of the mandrels, the finger pushing that carton continues downward in an arc as the chain carries that finger around the downstream sprocket. Since this downward arcing motion of each finger around the downstream sprocket could damage the trailing edges of the cartons as the chain carries the fingers forward and downward, the fingers are carefully shaped to endeavour to preclude such damage.

According to one aspect of the present invention, there is provided apparatus comprising a loading device including a loader for forwarding an article, a receiving device including a receiver for receiving said article delivered thereto by said loader, an advancing device arranged to advance said loader on an endless path, a driving device drivingly connected to said receiving device for advancing said receiver along a second path extending into the region of a portion of said endless path at which said loader delivers said article to said receiver, said advancing device being arranged to reverse said loader momentarily out of said region immediately following delivery of said article to said receiver.

According to another aspect of the present invention, there is provided a method comprising advancing a loader along an endless path into a region of which a second path extends and causing said loader to deliver an article to a receiver located on said second path at said region, momentarily reversing said loader out of said region immediately following the delivery of said article to said receiver, and advancing said receiver along said second path.

Owing to the present invention it is possible to avoid interference between the loader and an article on the receiver (or the receiver itself) and thereby to avoid consequential damage.

In particular, a highly accurate positional relationship between the carton and the loader may not be so necessary, whilst by using a brushless servo motor with pulse train command and encoded feedback it is nevertheless possible to attain a highly accurate positional relationship between the carton and the loader.

In a preferred embodiment of the invention, a carton forming machine turret loading apparatus is provided for loading the articles, which are partially-formed open-ended cartons, onto respective receivers, which are mandrels of a rotatable turret that indexes each carton through circumferentially-spaced work stations. The loading device is a conveyor arranged to propel a series of longitudinally-oriented cartons, in open-ended rectilinear tube form, along a load path and to load the cartons onto respective turret mandrels when those mandrels are axially-aligned with the load path. The turret loading apparatus also includes a loader guide arranged to guide cartons in open-ended rectilinear tube form axially along the load path and to maintain the cartons in axial alignment with respective turret mandrels. The advancing device is a loading servo motor drivingly connected to the conveyor and there are loaders, in the form of loading pushers carried by the conveyor, to engage successive cartons and propel them along the loader guide and onto respective mandrels. The apparatus includes a controller arranged to command the loading servo motor to advance the conveyor and transport each carton along the load path and into a fully mounted position on a mandrel and then to reverse the conveyor momentarily before the turret indexes. This momentary reversal is to prevent the loading pusher from interfering with the subsequent indexing of a carton by the turret or damaging a carton. The reversal also allows for a simpler design of loading pusher, because the pusher need not be designed to slip past the edge of the carton without damaging the carton as it would if mounted on a continuous, i.e. non-reversing, conveyor. Also, because the apparatus is capable of fully withdrawing the pusher, the apparatus can use the pusher to position each carton positively and accurately on its intended mandrel pusher.

The method of the preferred embodiment is of loading partially-formed open-ended cartons onto respective mandrels of an indexing turret of a turret loading apparatus provided adjacent a rotatably supported carton forming machine turret, where the turret loading apparatus includes a loader guide and a conveyor. A first carton is provided in open-ended rectilinear tube form on the loader guide. The conveyor is then advanced until a first loading pusher carried by the conveyor has engaged and propelled the first carton along a load path and onto a first turret mandrel. The first loading pusher is then withdrawn by reversing the conveyor. The turret is then indexed until the turret presents a second turret mandrel in alignment with the conveyor.

In order that the invention may be clearly and completely disclosed, reference will now be made, by way of example, to the accompanying drawings, in which:
Figure 1 is a side elevation of a turret loading apparatus installed adjacent a turret of a carton form-fill-seal machine;
Figure 2 a magnified partial view of the right-hand end of Figure 1, but with a conveyor chain of the apparatus broken away to show a rack of vacuum cups at a lowermost limit of its travel;
Figure 3 is an end elevation of the turret loading apparatus taken along line 3-3 of Figure 1;
Figure 4 is a magnified detail of the region circled 4 in Figure 3;
Figure 5 is a longitudinal sectional view of the apparatus taken along line 5-5 of Figure 3, but also illustrating in dot-dash lines certain items located to the right of that line, and showing a conveyor of the apparatus advancing and loading a carton onto a turret mandrel;
Figure 6 is a top plan of the apparatus according to Figure 5;
Figure 7 is a view similar to Figure 5, but showing the conveyor having been reversed after loading the carton onto the turret mandrel;
Figure 8 is a view similar to Figure 5, but showing the turret being indexed with the conveyor having been reversed;
Figure 9 is a view similar to Figure 5, but showing the conveyor advancing another carton onto a turret mandrel that has just been indexed into a position to receive the other carton;
Figure 10 is a schematic block diagram showing, inter alia, a controller, servo motors, and sensors of the apparatus; and
Figure 11 is a diagram showing graphs depicting profiles of an electronic feeding cam and an electronic loading cam of the turret loading apparatus and of an electronic turret cam of the machine incorporating the turret loading apparatus.

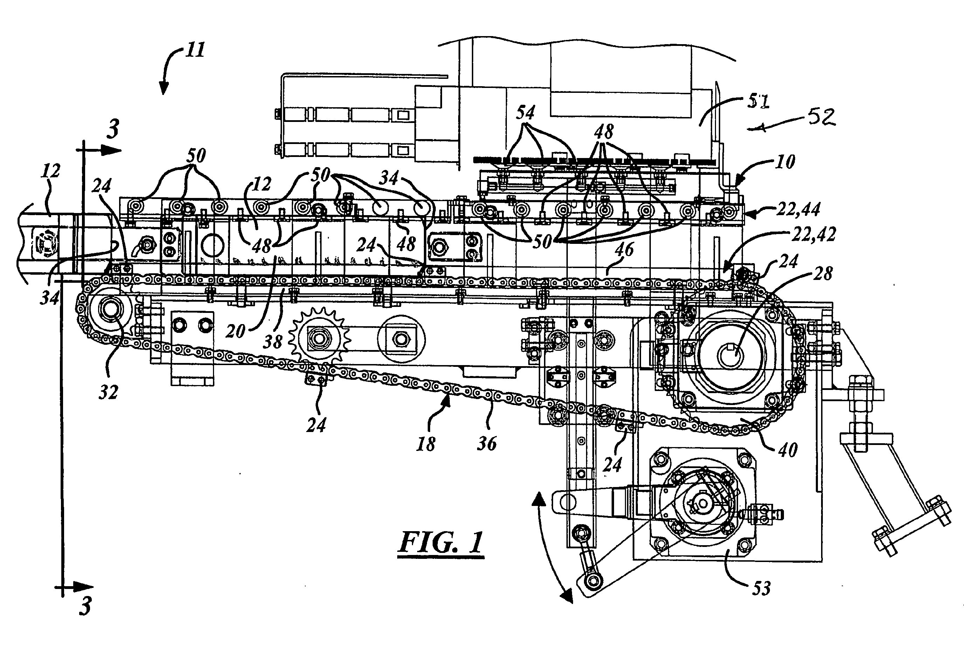

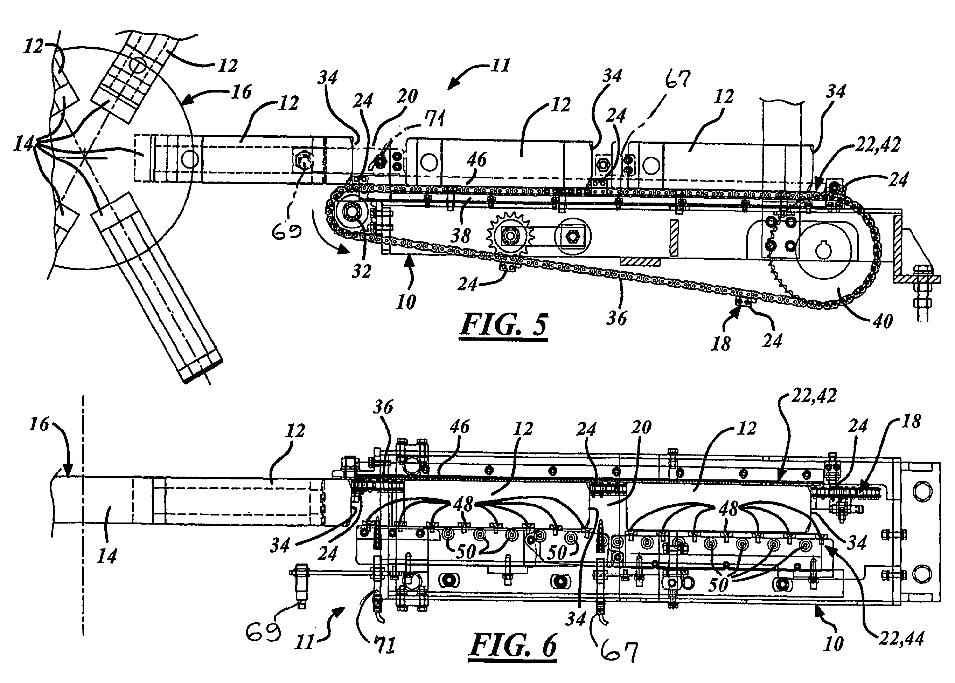

Referring to the drawings, a carton form-fill-seal machine turret loading apparatus is indicated at 10 in Figures 1 to 10 and is shown in Figures 1 and 5 to 10 as being installed in the machine generally indicated at 11. The apparatus 10 loads partially-formed, open-ended plastics-coated paperboard cartons 12 in rectilinear tube form onto respective radially-extending arms or mandrels 14 of an indexing turret 16, as shown in Figures 5 to 10, which rotates about a horizontal axis and upon which one end of each carton 12 is sequentially folded, closed, and sealed as the turret 16 indexes the carton through various circumferentially-spaced work stations in the machine 11 which forms the cartons 12 from flat carton sleeves.

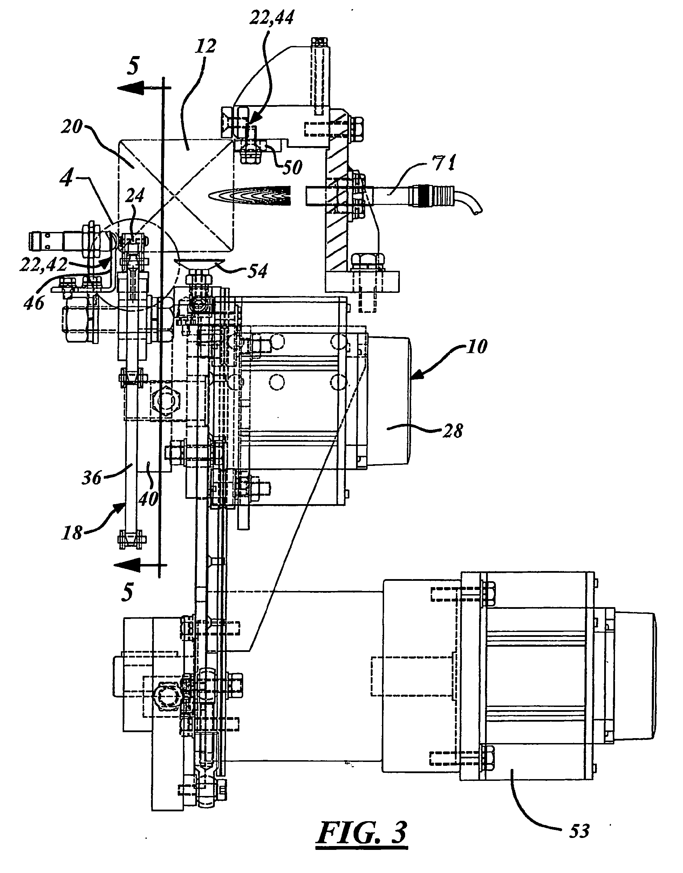

The apparatus 10 includes a loading conveyor, generally indicated at 18, that propels longitudinally-oriented cartons 12 in open-ended rectilinear tube form serially along a load path 20 and loads the cartons 12 onto respective turret mandrels 14 after each of the mandrels 14 has been rotationally indexed into a position axially aligned with the load path 20. The apparatus 10 also includes a loader guide, generally indicated at 22 in Figures 1 to 8, that guides the partially formed cartons 12 axially along the load path 20 and maintains the cartons 12 in axial alignment with respective turret mandrels 14. Five loading pushers 24 in the form of plastics chain lugs 24 are carried by the conveyor 18 at spaced positions along the conveyor to engage successive cartons 12 and propel them along the load path 20 and onto respective turret mandrels 14. A loading motor 28, in the present example a Mitsubishi HC-SF52 servo motor, is drivingly connected to the conveyor 18 as is best shown in Figure 3.

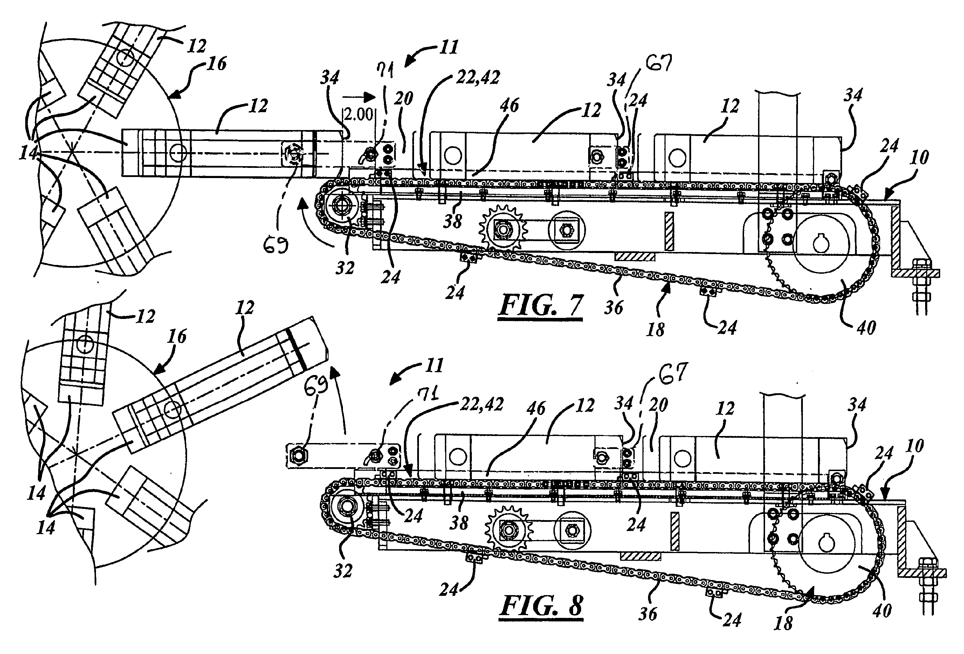

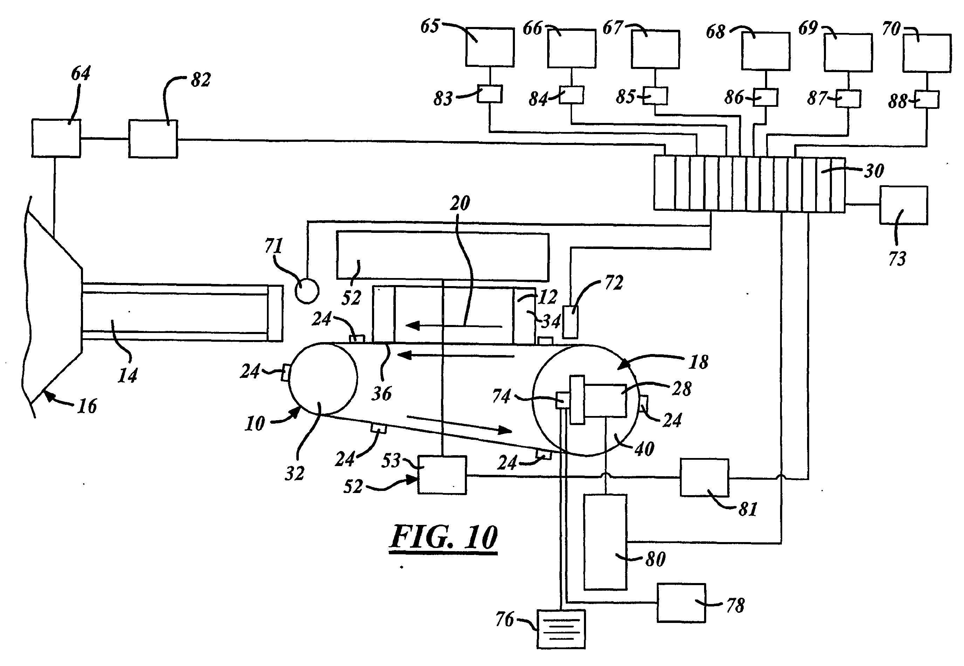

Referring to Figure 10, a controller 30 in the form of a programmable logic controller (PLC) 30 incorporates a motion central processing unit (CPU) (Mitsubishi Q173CPUN) and commands the motor 28, according to an electronic cam profile, to transport each carton 12 along the load path 20 and into a mounted position on a turret mandrel 14, as shown in Figures 5 and 6. Then, as shown in Figure 7, the PLC 30 commands the motor 28 to reverse the conveyor 18 a short distance before the turret 16 indexes. The reversal distance, approximately 3 to 5 mm. in the present example, is sufficient to prevent the loading pusher 24 that propelled the carton 12 onto the mandrel 14 from interfering with the subsequent indexing of the carton 12 by the turret 16 and to prevent any associated damage to the carton 12. In other words, once each carton 12 has reached a fully mounted position on one of the mandrels 14, the pusher 24 pushing that carton 12 is retracted a short distance by reversing the conveyor 18, so that the turret 16 can index the loaded carton 12 out of the way before the conveyor 18 is again advanced. This reversal avoids damage to trailing edges 34 of the cartons 12 as the conveyor 18 carries the pushers 24 forward and downward, obviating the need to shape the pushers 24 specially to preclude such damage. The reversal also allows the pusher 24 to deposit its carton 12 fully and positively in its respective fully mounted position on its mandrel 14 before the pusher 24 is subsequently moved out of the way through conveyor reversal. When the conveyor 18 is advanced again, it carries the pusher 24 through a downward arc as the conveyor 18 carries that pusher 24 around a downstream sprocket 32.

The use, to advance the conveyor 18, of a brushless servo motor 28 with pulse train command and with encoded position feedback allows the conveyor more accurately to position the cartons 12 on the mandrels 14. This is because such a servo motor can move almost any practically desired number of pulses, in either direction, over almost any practically desired distance, or for almost any practically desired period of time, at almost any practically desired velocity, and with almost any practically desired degree of acceleration that the PLC 30 directs. A Mitsubishi HC-SF52 servo motor, for example, has 131,072 pulses or positions for each 360 degrees of rotation.

The conveyor 18 includes a chain loop 36 which is carried on an upstream sprocket 40 and the downstream sprocket 32 and an upper run of which is supported on chain guides 38 between those sprockets. The motor 28 is drivingly connected to the upstream sprocket 40. The plastics loading pushers 24 are carried at spaced locations along, and extend radially outward from, the conveyor chain 36 in respective positions to engage and propel successive, partially-formed, open-ended cartons 12 along the loader guide 22 and onto respective turret mandrels 14. Each pusher 24 comprises ultra-high molecular weight (UHMW) polyethylene.

As best shown in Figure 3, the loader guide 22 includes two corner guides 42, 44 disposed in respective positions to guide diagonally opposite corners of each partially-formed open-ended carton 12 and to maintain the square cross-sectional rectilinear shape of each carton 12 during transport and turret loading. A lower corner guide 42 of the two corner guides 42, 44 includes the conveyor chain 36 and a side rail 46 positioned adjacent and parallel to the upper run of the conveyor chain 36. An upper corner guide 44 of the two corner guides 42, 44 includes a series of top rollers 48 supported adjacent a series of side rollers 50.

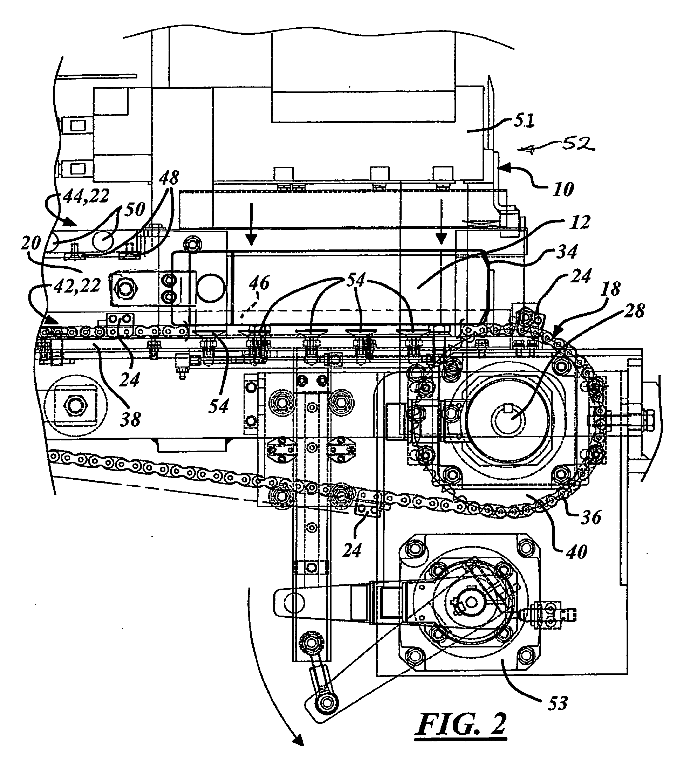

The corner guides 42, 44 receive cartons 12 in open-ended rectilinear tube form from a feeding device shown at 52 in Figures 1, 2, and 10. The feeding device includes a rack of vacuum cups 54 to engage each carton 12 in a carton magazine 51 as shown in Figure 1. The feeding device 52 includes a feeding servo motor 53 that then pulls downward on the rack of vacuum cups 54 to pull each carton 12 open into open-ended rectilinear tube form while moving each carton 12 downward into the load path 20 and into the loader guide 22, as shown in Figure 2. The corner guides 42, 44, because they engage diagonally-opposite corners of each carton 12, maintain the shape of the cartons 12 as the cartons 12 are transported along the load path 20 for loading on the turret mandrels 14.

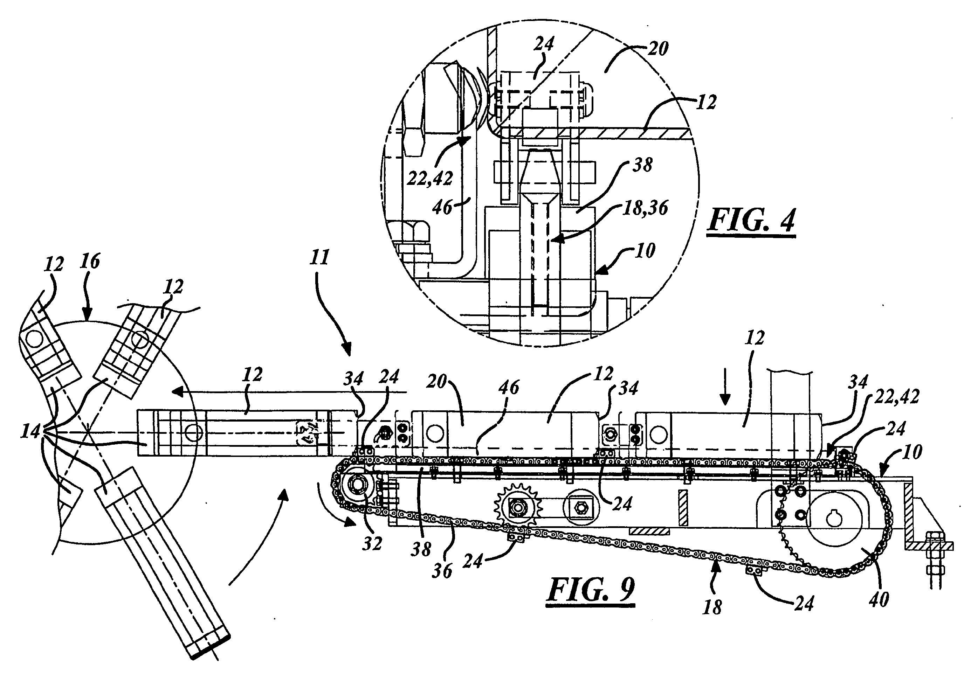

In practice, the turret loading apparatus 10 is installed in the machine 11 adjacent a carton forming machine turret 16. A first carton 12 is provided in open-ended rectilinear tube form on the loader guide 22 of the apparatus 10 as shown in Figure 2, and the conveyor 18 is advanced until a first loading pusher 24 carried by the conveyor 18 has engaged the first carton 12 and propelled it along the load path 20 defined by the loader guide 22 and onto a first turret mandrel 14, as shown in Figures 5 and 6. The first loading pusher 24 is then withdrawn by reversing the conveyor 18 as shown in Figure 7. The turret 16 is then indexed, as shown in Figure 8, until the turret 16 presents a second turret mandrel 14 in alignment with the conveyor 18, as shown in Figure 9. The steps of advancing, withdrawing, and indexing are then repeated for second and subsequent loading pushers 24, cartons 12, and turret mandrels 14. The withdrawing step is included to allow the loading pusher 24 to locate the carton 12 more positively on the mandrel 14, to prevent the loading pusher 24 from interfering with the subsequent indexing of the carton 12 by the turret 16, and to prevent any associated carton damage.

The PLC 30 includes a virtual motor or virtual time axis - a software clock that runs continuously in time. The virtual time axis is the virtual master timer for synchronizing all operations of the machine 11 including the feeding device 52, the loading device 18-24, and the turret 16. It has a constant cycle speed that is scaled to 360 degrees of rotation.

The loading servo motor 28, the feeding servo motor 53, and seven further servos or servo axes 64-70 of the machine 11 are slaved to the virtual time axis of the PLC 30 via respective electronic cams programmed into the PLC 30. The seven other servos, shown at 64-70 in Figure 10, are a turret servo motor 64 for controlling the indexing of the turret 16, a carton stripper servo motor 65 for stripping cartons off the turret mandrels 14, a transfer unit servo motor 66 for moving cartons from the stripper to a second conveyor (not shown), two filler servos 67 and 68 for controlling carton filler units (not shown), a carton lifter servo motor 69 for lifting cartons from the second carton conveyor of the machine into position for filling, and a conveyor servo motor 70 for controlling the indexing of the second conveyor. The servos 28, 53 and 64 to 70 are connected to the PLC 30 through respective servo amplifiers 80 to 88.

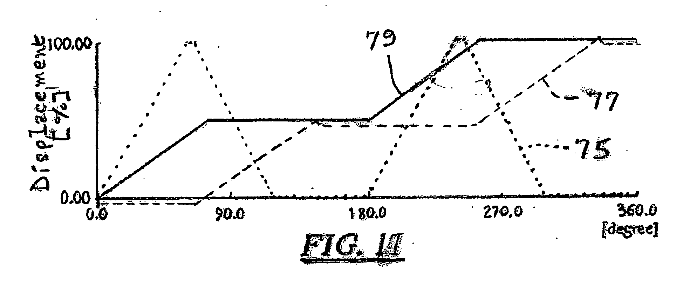

The PLC 30 includes an electronic cam for each of the two servo motors 28 and 53 in the turret loading apparatus 10 as well as for each of the seven further servos 64 to 70 in the machine 11. One of the electronic cams for the turret loading apparatus 10 is a feeder cam, which includes an electronic profile, shown at 75 in Figure 11, that defines the motions of the feeding servo motor 53 driving the feeding device 52. The other of the electronic cams for the turret loading apparatus 10, a loading cam, includes a profile, shown at 77, that defines the accelerations, decelerations and dwell times of the loading servo motor 28. One of the further electronic cams for the machine 11 is a receiving or turret cam, which includes a profile, shown at 79, that defines motions of the turret servo motor 64 that indexes the turret 16. The cam profiles are illustrated for a so-called "double-indexing" machine 11 in which the turret 10 performs two indexes for each index of the main conveyor (not shown) of the machine. Each of the nine electronic cams programmed into the PLC 30, including the feeding, loading, and turret cams described above, follows the virtual time axis.

The feeding, loading, and turret cams are programmed so that the loading servo motor 28 is in dwell while the feeding device 52 is feeding, and so that the loading pusher 24 starts retracting before the turret 16 starts indexing. More specifically, once the feeding device 52 has finished moving a carton 12 from the magazine 51 to the load path 20 and opening the carton 12 into its open-ended rectilinear tube form, the PLC 30 commands the loading servo motor 28 to drive the loader chain 36 forwards in a "pre-load index" that moves the carton 12 to a pre-load position set by the loading cam.

In the pre-load position an optical pre-load detection sensor 71 confirms and reports the presence of a carton 12 to the PLC 30. If the sensor 66 detects a carton 12, the PLC 30 commands the loading servo motor 28 to reverse the loader chain 36 about 3 to 5mm. and to dwell in that position while the PLC 30 commands the feeding servo motor 53 to cause the feeding device 52 to deposit a second partially-formed carton 12 on the load path behind the carton 12 in the pre-load position, while the turret servo motor 64 indexes (together with any immediately preceding carton thereon).

The PLC 30 then commands the loading servo motor 28 to drive the loader chain 36 forwards in a "load index" that moves the first carton 12 from the pre-load position to a loaded position on a turret mandrel 14 while moving the second carton 12 to the pre-load position. At this point the PLC 30, according to the loader cam, commands the loading servo motor 28 to reverse the loader chain 36 about 3 to 5mm., so that the loading pusher 24 that pushed the first carton 12 into the loaded position is withdrawn from the path of the turret mandrels 14. The PLC 30 then, according to the turret cam, commands the turret servo motor 64 to index the turret 16. This, the normal operating mode of the machine 11, is called the "virtual mode" of operation.

The PLC 30 is also programmed to include, as a safety feature, an electronic clutch for each servo axis. The PLC 30 receives inputs from multiple sensors indicating product in tanks, temperature of heaters, fault status of various machine components, air pressure, vacuum, power, etc. The PLC 30 will allow the clutches to remain "engaged", allowing the servos to operate, only if all of the sensor indications are positive, indicating that the machine 11 is ready to operate.

In addition, there are certain sensors that serve only to reset or disengage certain electronic clutches. For example, a pre-load detection sensor 71 in the form of a photo eye causes the loader clutch to reset if the pre-load sensor 71 fails to detect a carton 12 in the pre-load position when, according to the loader cam, a carton 12 should be in that position. Similarly, there is a similar post-feeding sensor 67 corresponding to a post-feeding position of a carton 12 on the conveyor 18 and a mounting sensor 69 corresponding to a mounting position of a carton 12 on the mandrel 14.

As an additional safety feature, should any of several safety circuits of the machine 11 be broken owing, for example, to a door being opened or an emergency stop switch pressed, the PLC 30 automatically takes the machine 11 from virtual mode to real mode by removing power from all of the servos, retracting all valves, disabling all of the electronic clutches, and stopping the virtual time axis. Going from virtual mode to real mode removes any possibility of the virtual time axis operating and causing a potentially unsafe situation or damaging equipment.

The PLC 30 in also programmed to include a homing mode that prepares the machine 11 to resume operation after the safety circuits are restored by, e.g., closing any open access doors and/or pressing a reset button. The machine 11 must be homed to align all components properly before returning to the virtual mode.

The machine 11 enters the homing mode either automatically once an operator restores the safety circuits while a key switch is in a run mode, or, if the key switch is in a maintenance mode, an operator must also go to a touch-screen of a human-machine interface (HMI) shown at 73 in Figure 10, and touch a home button image on the screen of the HMI 73 to start the homing process.

The homing routine includes running the carton loading apparatus 10 in the forward direction and stopping when an optical homing detection sensor 72 sees a loading pusher 24 in a desired homing position. The PLC 30 then zeros out its homing position register and commands an offset from this position for each of the other eight servos of the machine 11. Each offset position is adjustable by manipulating a register in the PLC 30 through the HMI 73. Each offset generally remains the same but may change if, for example, the sensor position changes. The loading servo motor 28 has an encoder 74 that includes a battery back-up 76 to allow it to recall its position even following a power down or in other situations when power from a main power source 78 is unavailable.

Once every servo axis, turret servo motor 64, loading servo motor 28, etc. has completed homing, the PLC 30 returns automatically to virtual mode, ready to "spin." A start button must then be pressed for three seconds before the virtual clock will start spinning again. The PLC 30 then checks all machine conditions as described above. Once the PLC 30 has provided an indication on the HMI 73 that the machine 11 is homed and ready, an operator must press a feeder start button to engage the electronic clutches in a predetermined sequence. The nine servo axes of the machine 11 then begin to operate in concert, following their respective electronic cam profiles, synchronized to the master virtual axis.

The turret loading apparatus described with reference to the drawings allows for a simpler loading pusher design and can more positively and accurately position cartons on turret mandrels.

## Claims

1. Apparatus comprising a loading device (18) including a loader (24) for forwarding an article (12), a receiving device (16) including a receiver (14) for receiving said article (12) delivered thereto by said loader (24), an advancing device (28) arranged to advance said loader (24) on an endless path, a driving device (64) drivingly connected to said receiving device (16) for advancing said receiver (14) along a second path extending into the region of a portion of said endless path at which said loader (24) delivers said article (12) to said receiver (14), said advancing device (28) being arranged to reverse said loader (24) momentarily out of said region immediately following delivery of said article (12) to said receiver (14).

2. Apparatus according to claim 1, wherein said delivering device (18) is an endless conveyor (18), said loader (24) is a pusher (24) of said conveyor (18), and said receiving device (16) comprises a series of mandrels (14) one of which is said receiver (14), said article (12) being a partially formed packaging carton (12) receivable over said receiver (14).

3. Apparatus according to claim 2, wherein said receiving device (16) is a rotatable turret (16) which has said mandrels (14) distribute therearound and which indexes said article (12) through circumferentially spaced work stations, said pusher (14) serving to propel said article (12) along a load path (20) and to load said article (12) onto said receiver (14) once the latter has been indexed into a position axially aligned with said load path (20), and said loading device (18) including a loader guide (22) arranged to maintain said article (12) in axial alignment with said receiver (14) during loading of said article (12) onto said receiver (14).

4. Apparatus according to claim 3, in which said loader guide (22) includes only two corner guides (42,44) disposed in respective positions to guide diagonally opposite corners of said article (12).

5. Apparatus according to claim 3 or 4, and further comprising a controller (30) arranged to command said advancing device (28) to advance said conveyor (18) and thereby transport said article (12) along said load path (20) and into a delivered position on said receiver (14) and then to reverse said conveyor (18) momentarily before said turret (16) indexes, said article (12) being an open-ended container (12) of rectangularly tubular form.

6. Apparatus according to claim 5, and further comprising a feeding device (52) arranged to feed said article (12) to said loading device (18) and a feeding servo motor (53) arranged to drive said feeding device (52), and wherein said advancing device (28) is a loading servo motor (28) and said driving device (64) is a receiving servo motor (64), said controller (30) being programmed to synchronize operation of said loading servo motor (28) with at least one of said receiving servo motor (64) and said feeding servo motor (53).

7. Apparatus according to claim 6, wherein said controller (30) has a virtual time axis (60) to which the synchronized servo motors (28,53,64) are slaved via respective electronic cams programmed into the controller (30).

8. Apparatus according to claim 6 or 7, wherein said controller (30) is programmed to provide electronic cam profiles that define accelerations, decelerations, and dwells of the servo motors (28,53,64).

9. Apparatus according to any one of claims 6 to 8, wherein said controller (30) is programmed to provide electronic clutches arranged to terminate the operation of the servos motors (28, 53, 64) in response to predetermined unacceptable sensor input values of any one or more parameters selected from the group consisting of air pressure, vacuum pressure, electrical power, fault status of various apparatus components, amount of product remaining in tanks, and heater temperatures.

10. Apparatus according to any one of claims 6 to 8, and further comprising a pre-load detection sensor (71) arranged to detect presence of said article (12) in a pre-load position on said loading device (18), wherein said controller (30) is programmed to include an electronic clutch arranged to preclude operating of said loading servo motor (28) in response to an indication by said pre-load detection sensor (71) that no article (12) is present in said pre-load position.

11. Apparatus according to claim 9 or 10 as appended to claim 7 as appended to claim 6, wherein said controller (30) is programmed to disable the electronic clutch(es), remove power from the servo motors (28, 53, 64), and stop the virtual time axis (60) in response to a sensed dangerous condition or stop command.

12. Apparatus according to any one of claims 6 to 11, and included in a container-forming machine which includes other devices which perform other functions and which are driven by respective other servo motors, said apparatus further comprising a homing detection sensor (72) arranged to sense the presence of said loader (24) in a desired homing position, wherein said controller (30) is programmed to home said loading servo motor (28), said feeding servo motor (53) and said receiving servo motor (64) as well as said other servo motors by stopping the loading servo motor (28) when forward running and when said homing detection sensor (72) senses the presence of said loader (24) in said desired homing position, and running said feeding servo motor (53) and said receiving servo motor (64) into predetermined positions offset relative to said loading servo motor (28).

13. Apparatus according to any one of claims 6 to 12, and further comprising a feedback device (74) which serves to inform said controller (30) as to the position of said loading servo motor (28).

14. Apparatus according to claim 13, wherein said feedback device (74) comprises an encoder (74) connected to said controller (30), said apparatus further comprising a battery back-up (76) connected to said encoder (74) and arranged to power the encoder (74) whenever a primary source of electrical power fails to provide power to the encoder (74).

15. Apparatus according to any one of claims 6 to 14, wherein said apparatus further comprises a device (80) which is connected to said loading servo motor (28) and which is caused by said controller (30) to emit a pulse chain to command the operation of said loading servo motor (28).

16. Apparatus according to any preceding claim, in which said loader (24) comprises ultra-high molecular weight polyethylene.

17. A method comprising advancing a loader (24) along an endless path into a region of which a second path extends and causing said loader (24) to deliver an article (12) to a receiver (14) located on said second path at said region, momentarily reversing said loader (24) out of said region immediately following the delivery of said article (12) to said receiver (14), and advancing said receiver (14) along said second path.

18. A method according to claim 17, wherein said article (12) is a partially formed container (12) which, when delivered by said loader (24), has thereby been received over said receiver (14) which is in the form of a mandrel (14).

19. A method according to claim 17 or 18, and further comprising causing an appropriately programmed controller (30) to command a loading servo motor (28) to advance an endless conveyor (18) until said loader (24) which is carried by said conveyor (18) has propelled said article (12) along a load path (20) and onto said receiver (14) and to command said loading servo motor (28) to reverse said conveyor (18) once said loader (24) has propelled said article (12) onto said receiver (14).

20. A method according to claim 19, and further comprising causing the appropriately programmed controller (30) to command said conveyor (18) to start reversing and thereafter to command said receiver (14) to advance along said second path.

21. A method according to claim 19 or 20, and further comprising feeding said article (12) to said endless conveyor (18) before propelling said article (12) along said load path (20), and causing the appropriately programmed controller (30) to synchronize the operation of said loading servo motor (28) with at least one of a receiving servo motor (64) and a feeding servo motor (53).

22. A method according to claim 21, and further comprising causing said controller (30) to provide a virtual time axis (60) and to enslave the servo motors (28,53,64) to said virtual time axis (60) via respective electronic cams (75,77,79) programmed into the controller (30).

23. A method according to any one of claims 19 to 22, and further comprising causing the appropriately programmed controller (30) to provide an electronic loader cam profile which defines accelerations, decelerations, and dwell times of said loading servo motor (28).

24. A method according to any one of claims 19 to 23, and further comprising causing the appropriately said programmed controller (30) to provide electronic clutches and utilizing said clutches to terminate the operation of the servo motors (28,53,64) in response to predetermined unacceptable sensor input values of any one or more parameters selected from the group consisting of air pressure, vacuum pressure, electrical power, fault status of various machine components, amount of product remaining in tanks, and heater temperatures.

25. A method according to any one of claims 19 to 24, and further comprising causing the appropriately programmed controller (30) to provide an electronic clutch and utilizing said clutch to preclude operation of said loading servo motor (28) in response to an indication that no carton (12) is present in a pre-load position.

26. A method according to any one of claims 19 to 25, and further comprising causing the appropriately programmed controller (30) to disable the electronic clutch(es), remove power from the servo motor(s) (28,53,64), and stop the virtual time axis (60) in response to a sensed dangerous condition or stop command.

27. A method according to claim 21 or 22, or any one of claims 23 to 26 as appended to claim 21, and further comprising causing the appropriately programmed controller (30) to home the servo motors (28,53,64) by stopping the loading servo motor (28) when it is running forwards and the presence of said loader (24) in a desired homing position is detected and running said feeding servo motor (53) and said receiving servo motor (64) into predetermined positions offset relative to said desired homing position, and to home other servo motors of a container forming machine (11) including said receiver (14), said loader (24), said loading servo motor (28), said controller (30), said feeding servo motor (53) and said receiving servo motor (64).

28. A method according to any one of claims 19 to 27, and further comprising feeding back to said controller (30) the position of said loading servo motor (28).

## Patentansprüche

1. Vorrichtung mit einer Ladevorrichtung (18), welche einen Lader (24) zum Vorbewegen eines Artikels (12) aufweist, einer Empfangsvorrichtung (16), welche eine Empfangseinrichtung (14) zum Empfangen des an diese ihm Lader (24) abgelieferten Artikels (12), einer Vorbewegungsvorrichtung (28), welche zum Vorbewegen des Lader (24) entlang einer Endlosbahn ausgebildet ist, einer Antriebsvorrichtung (64), welche treibend mit der Empfangsvorrichtung (16) verbunden ist, um die Empfangseinrichtung (14) entlang einer zweiten Bahn vorzubewegen, welche sich in den Bereich eines Teils der Endlosbahn erstreckt, in welchem der Lader (24) den Artikel (12) an die Empfangseinrichtung (14) abliefert, wobei die Vorbewegungseinrichtung (28) derart ausgebildet ist, dass sie den Lader (24) unmittelbar nach dem Abliefern des Artikels (12) an die Empfangseinrichtung (14) kurzzeitig rückwärts aus dem genannten Bereich bewegt.

2. Vorrichtung nach Anspruch 1, bei welcher die Ausgabevorrichtung (18) ein Endlosförderer (18) ist, der Lader (24) ein Schieber (24) des Förderers (18) ist, und die Empfangsvorrichtung (16) eine Reihe von Dornen (14) aufweist, von welchen einer die Empfangseinrichtung (14) ist, wobei der Artikel (12) ein teilweise geformter Verpackungskarton (12) ist, welcher über der Empfangseinrichtung (14) aufnehmbar ist.

3. Vorrichtung nach Anspruch 2, bei welcher die Empfangsvorrichtung (16) ein drehbarer Revolverkopf (16) ist, um welchen die Dorne (14) herum verteilt angeordnet sind und welcher den Artikel (12) schrittweise durch umfangsmäßig beabstandete Arbeitsstationen bewegt, wobei der Schieber (14) dazu dient, den Artikel (12) entlang eines Ladepfads (20) vorzubewegen und den Artikel (12) auf die Empfangseinrichtung (14) zu laden, sobald letzterer in eine axial mit dem Ladepfad (20) ausgerichtete Position bewegt ist, und wobei die Ladevorrichtung (18) eine Laderführung (22) aufweist, die derart ausgebildet ist, dass sie den Artikel (12) während des Ladens des Artikels (12) auf die Empfangeinrichtung (14) in axialer Ausrichtung mit der Empfangseinrichtung (14) hält.

4. Vorrichtung nach Anspruch 3, bei welcher die Laderführung (22) lediglich zwei Eckführungen (42, 44) aufweist, welche an jeweiligen Positionen angeordnet sind, um diagonal gegenüberliegende Ecken des Artikels (12) zu führen.

5. Vorrichtung nach Anspruch 3 oder 4, und ferner mit einer Steuerung (30), welche die Vorbewegungsvorrichtung (28) derart steuert, dass sie den Förderer (18) vorbewegt und **dadurch** den Artikel (12) entlang dem Ladepfad (20) und in eine Ausgabeposition auf den Empfänger (14) transportiert, und dass sie anschließend den Förderer (18) kurzzeitig rückwärts bewegt, bevor sich der Revolverkopf (16) weiter bewegt, wobei der Artikel (12) ein offene Enden aufweisender Behälter (12) von rechteckig-rohrförmiger Gestalt ist.

6. Vorrichtung nach Anspruch 5, und ferner mit einer Zuführvorrichtung (52), die zum Zuführen des Artikels (12) zu der Ladevorrichtung (18) ausgebildet ist, und einem Zuführ-Servomotor (53), welcher zum Antreiben der Zuführvorrichtung (28) ausgebildet ist, und wobei die Vorbewegungsvorrichtung (28) ein Lade-Servomotor (28) und die Antriebsvorrichtung (64) ein Empfangs-Servomotor (64) ist, wobei die Steuerung (30) derart programmiert ist, dass sie den Betrieb des Lade-Servomotors (28) mit dem Empfangs-Servomotor (64) und/oder dem Zuführ-Servomotor (53) synchronisiert.

7. Vorrichtung nach Anspruch 6, bei welcher die Steuerung (30) eine virtuelle Zeitachse (60) aufweist, welcher die synchronisierten Servomotoren (28, 53, 64) durch jeweiligen in die Steuerung (30) programmierte elektronische Nocken untergeordnet sind.

8. Vorrichtung nach Anspruch 6 oder 7, bei welcher die Steuerung (30) derart programmiert ist, dass sie elektronische Nockenprofile bereitstellt, welche Beschleunigungen, Verlangsamungen und Verweilzeiten der Servomotoren (28, 53, 64) definieren.

9. Vorrichtung nach einem der Ansprüche 6 bis 8, bei welcher die Steuerung (30) derart programmiert ist, dass sie elektronische Kupplungen bereitstellt, welche derart ausgebildet sind, dass sie den Betrieb der Servomotoren (28, 53, 64) in Reaktion auf vorbestimmte unzulässige Sensoreingangswerte für einen beliebigen oder mehrere Parameter beendet, welche aus der Gruppe ausgewählt sind, die umfasst: Luftdruck, Vakuumdruck, elektrische Energie, Fehlerzustand verschiedener Vorrichtungskomponenten in Tanks verbleibende Produktmenge, und Heizvorrichtungstemperaturen.

10. Vorrichtung nach einem der Ansprüche 6 bis 8, und ferner mit einem Vorlade-Erkennungssensor (71), welcher zum Erkennen des Vorhandenseins des Artikels (12) an einer Vorladeposition auf der Ladevorrichtung (18) angeordnet ist, wobei die Steuerung (30) derart programmiert ist, dass sie eine elektronische Kupplung aufweist, die derart ausgebildet ist, dass sie den Betrieb des Lade-Servomotors (28) in Reaktion auf eine Angabe seitens des Vorlade-Erkennungssensors (71), dass kein Artikel (12) an der Vorladeposition vorhanden ist, verhindert.

11. Vorrichtung nach Anspruch 9 oder 10, soweit auf Anspruch 6 zurückbezogen, bei welcher die Steuerung (30) derart programmiert ist, dass sie die elektronische(n) Kupplung(en) deaktiviert, die Servomotoren (28, 53, 64) stromlos setzt, und die virtuelle Zeitachse (60) in Reaktion auf einen erfassten gefährlichen Zustand oder einen Stopbefehl anhält.

12. Vorrichtung nach einem der Ansprüche 6 bis 11, und enthalten in einer Behälterformmaschine, welche andere Vorrichtungen aufweist, die andere Funktionen haben und von jeweiligen anderen Servomotoren getrieben sind, wobei die Vorrichtung einen Ausgangspositionserkennungssensor (72) aufweist, welcher zum Erkennen des Vorhandenseins des Laders (24) an einer angestrebten Ausgangsposition ausgebildet ist, wobei die Steuerung (30) derart programmiert ist, dass sie den Lade-Servomotor (28), den Zuführ-Servomotor (53) und den Empfangs-Servomotor (64) sowie die anderen Servomotoren auf die Ausgangsposition fährt, indem sie den Lade-Servomotor (28) stoppt, wenn dieser vorwärts läuft und wenn der Ausgangspositionserkennungssensor (72) das Vorhandensein des Laders (24) an der angestrebten Ausgangsposition erkennt, und indem sie den Zuführ-Servomotor (53) und den Empfangs-Servomotor (64) an vorbestimmte Positionen fährt, welche in bezug auf den Lade-Servomotor (28) versetzt sind.

13. Vorrichtung nach einem der Ansprüche 6 bis 12, und ferner mit einer Rückkopplungsvorrichtung (74), welche die Steuerung (30) über die Position des Lade-Servomotors (28) informiert.

14. Vorrichtung nach Anspruch 13, bei welcher die Rückkopplungsvorrichtung (74) einen Kodierer (74) aufweist, der mit der Steuerung (30) verbunden ist, wobei die Vorrichtung ferner einen Netzausfallschutz (76) aufweist, welche mit dem Kodierer (74) verbunden ist und derart ausgebildet ist, dass sie den Kodierer (74) speist, wenn die Stromversorgung des Kodierers (74) durch eine primäre Stromquelle ausfällt.

15. Vorrichtung nach einem der Ansprüche 6 bis 14, bei welcher die Vorrichtung ferner eine Vorrichtung (80) aufweist, welche mit dem Lade-Servomotor (28) verbunden ist und von der Steuerung (30) veranlasst wird, eine Impulskette zur Steuerung des Betriebs des Lade-Servomotors (28) auszugeben.

16. Vorrichtung nach einem der vorhergehenden Ansprüche, bei welcher der Lader (24) ultra-hochmolekulares Polyethylen aufweist.

17. Verfahren mit den Schritten des Vorbewegens eines Laders (24) entlang einer Endlosbahn, wobei sich eine zweite Bahn in einen Bereich derselben erstreckt, und des Bewirkens des Ablieferns eines Artikels (12) an eine Empfangseinrichtung (14), die sich auf der zweiten Bahn in dem genannten Bereich befindet, des kurzzeitigen Rückwärtsbewegens des Laders (24) aus dem Bereich unmittelbar nach der Ausgabe des Artikels (12) an die Empfangseinrichtung (14), und des Vorbewegens der Empfangseinrichtung (14) entlang der zweiten Bahn.

18. Verfahren nach Anspruch 17, bei welchen der Artikel (12) ein teilweise geformter Behälter (12) ist, welcher, wenn er durch den Lader (24) abgeliefert wurde, über die in Form eines Dorns (14) vorliegende Empfangseinrichtung (14) aufgenommen ist.

19. Verfahren nach Anspruch 17 oder 18, und ferner mit dem Schritt des Veranlassens einer in geeigneter Weise programmierten Steuerung (30), einen Lade-Servomotor (28) derart zu steuern, dass dieser einen Endlosförderer (18) vorbewegt, bis der von dem Förderer (18) getragene Lader (24) den Artikel (12) entlang eines Ladepfades (20) und auf die Empfangseinrichtung (14) bewegt hat, und den Lade-Servomotor (28) derart zu steuern, dass dieser den Förderer (18) rückwärts bewegt, sobald der Lader (24) den Artikel (12) auf die Empfangseinrichtung (14) bewegt hat.

20. Verfahren nach Anspruch 19 und ferner mit dem Schritt des Veranlassens der in geeigneter Weise programmierten Steuerung (30), den Förderer (18) derart zu steuern, dass er die Rückwärtsbewegung beginnt, und die Empfangseinrichtung (14) anschließend derart zu steuern, dass sie sich entlang der zweiten Bahn vorbewegt.

21. Verfahren nach Anspruch 19 oder 20, und ferner mit dem Zuführen des Artikels (12) zu dem Endlosförderer (18) bevor der Artikel (12) entlang des Ladepfades (20) bewegt wird, und Veranlassen der in geeigneter Weise programmierten Steuerung (30), den Betrieb des Lade-Servomotors (28) mit dem Empfangs-Servomotor (64) und/oder dem Zuführ-Servomotor (53) zu synchronisieren.

22. Verfahren nach Anspruch 21, und ferner mit dem Schritt des Veranlassens der Steuerung (30) eine virtuelle Zeitachse (60) bereitzustellen und die Servomotoren (28, 53, 64) der virtuellen Zeitachse (60) über in die Steuerung (30) programmierte jeweilige elektronische Nocken (75, 77, 79) unterzuordnen.

23. Verfahren nach einem der Ansprüche 19 bis 22, und ferner mit dem Schritt des Veranlassens der in geeigneter Weise programmierten Steuerung (30), ein elektronisches Ladernockenprofil bereitzustellen, das Beschleunigungen, Verlangsamungen und Verweilzeiten des Lade-Servomotors (28) definiert.

24. Verfahren nach einem der Ansprüche 19 bis 23, und ferner mit dem Schritt des Veranlassens der in geeigneter Weise programmierten Steuerung (30), elektronische Kupplungen bereitzustellen und die Kupplungen zu verwenden, um den Betrieb der Servomotoren (28, 53, 64) in Reaktion auf vorbestimmte unzulässige Sensoreingangswerte für einen beliebigen oder mehrere Parameter zu beenden, welche aus der Gruppe ausgewählt sind, die umfasst: Luftdruck, Vakuumdruck, elektrische Energie, Fehlerzustand verschiedener Vorrichtungskomponenten in Tanks verbleibende Produktmenge, und Heizvorrichtungstemperaturen.

25. Verfahren nach einem der Ansprüche 19 bis 24, und ferner mit dem Schritt des Veranlassens der in geeigneter Weise programmierten Steuerung (30), eine elektronische Kupplung bereitzustellen und die Kupplung zu nutzen, um den Betrieb des Lade-Servomotors (28) in Reaktion auf eine Angabe, dass kein Karton (12) an der Vorladeposition vorhanden ist, zu verhindern.

26. Verfahren nach einem der Ansprüche 19 bis 25, und ferner mit dem Schritt des Veranlassens der in geeigneter Weise programmierten Steuerung (30), die elektronische(n) Kupplung(en) zu deaktivieren, die Servomotoren (28, 53, 64) stromlos zu setzen, und die virtuelle Zeitachse (60) in Reaktion auf einen erfassten gefährlichen Zustand oder einen Stopbefehl anzuhalten.

27. Verfahren nach einem der Ansprüche 21 oder 22, oder einem der Ansprüche 23 bis 26 soweit auf Anspruch 21 rückbezogen, und ferner mit dem Schritt des Veranlassens der in geeigneter Weise programmierten Steuerung (30), die Servomotoren (28, 53, 64) in die Ausgangsposition zu verbringen, indem sie den Lade-Servomotor (28) stoppt, wenn dieser vorwärts läuft und, die Präsenz des Laders (24) an einer angestrebten Ausgangsposition erkannt wird, und indem der Zuführ-Servomotor (53) und der Empfangs-Servomotor (64) an vorbestimmte, zu der angestrebten Ausgangsposition versetzte Positionen bewegt werden, und andere Servomotoren einer Behälterformmaschine (11), welche die Empfangseinrichtung (14), den Lader (24), den Lade-Servomotor (28), die Steuerung (30), den Zuführ-Servomotor (53) und den Empfangs-Servomotor (64) umfasst, an deren Ausgangspositionen zu bewegen.

28. Verfahren nach einem der Ansprüche 19 bis 27, und ferner mit dem Schritt des Rückmeldens der Position des Lade-Servomotors (28) an die Steuerung (30).

## Revendications

1. Appareil comprenant un dispositif de chargement (18) comprenant une chargeuse pour acheminer un article (12), un dispositif de réception (16) comprenant un récepteur (14) pour recevoir ledit article (12) délivré à celui-ci par ladite chargeuse (24), un dispositif d'avance (28) agencé pour avancer ladite chargeuse (24) sur un trajet sans fin, un dispositif d'entraînement (64) relié de manière entraînante audit dispositif de réception (16) pour avancer ledit récepteur (14) le long d'un deuxième trajet s'étendant dans la région d'une partie dudit trajet sans fin dans laquelle ladite chargeuse (24) délivre ledit article (12) audit récepteur (14), ledit dispositif d'avance (28) étant agencé pour ramener ladite chargeuse (24) momentanément en-dehors de ladite région immédiatement à la suite de la distribution dudit article (12) audit récepteur (14).

2. Appareil selon la revendication 1, dans lequel ledit dispositif de distribution (18) est un transporteur sans fin (18), ladite chargeuse (24) est un dispositif de poussée (24) dudit transporteur (18), et ledit dispositif de réception (16) comprend une série de mandrins (14) dont l'un est ledit récepteur (14), ledit article (12) étant un carton d'emballage partiellement formé (12) pouvant être reçu sur ledit récepteur (14).

3. Appareil selon la revendication 2, dans lequel ledit dispositif de réception (16) est une tourelle rotative (16) autour de laquelle lesdits mandrins (14) sont répartis et qui indexe ledit article (12) par l'intermédiaire de postes de travail circonférentiellement espacés, ledit dispositif de poussée (14) servant à propulser ledit article (12) le long d'un trajet de chargement (20) et à charger ledit article (12) sur ledit récepteur (14) une fois que ce dernier a été indexé dans une position alignée axialement avec ledit trajet de chargement (20), et ledit dispositif de chargement (18) comprenant un guide de chargeuse (22) agencé pour maintenir ledit article (12) en alignement axial avec ledit récepteur (14) pendant le chargement dudit article (12) sur ledit récepteur (14).

4. Appareil selon la revendication 3, dans lequel ledit guide de chargeuse (22) ne comprend que deux guides de coin (42, 44) disposés à des positions respectives pour guider des coins diagonalement opposés dudit article (12).

5. Appareil selon la revendication 3 ou 4, et comprenant en outre un contrôleur (30) agencé pour commander ledit dispositif d'avance (28) pour avancer ledit transporteur (18) et, de ce fait, transporter ledit article (12) le long dudit trajet de chargement (20) et dans une position de distribution sur ledit récepteur (14) et ensuite pour inverser ledit transporteur (18) momentanément avant que ladite tourelle (16) ne s'indexe, ledit article (12) étant un conteneur à extrémité ouverte (12) de forme tubulaire rectangulaire.

6. Appareil selon la revendication 5, et comprenant en outre un dispositif de distribution (52) agencé pour distribuer ledit article (12) audit dispositif de chargement (18) et un servomoteur de distribution (53) agencé pour commander ledit dispositif de distribution (52), et dans lequel ledit dispositif d'avance (28) est un servomoteur de chargement (28) et ledit dispositif d'entraînement (64) est un servomoteur de réception (64), ledit contrôleur (30) étant programmé pour synchroniser le fonctionnement dudit servomoteur de chargement (28) avec au moins l'un dudit servomoteur de réception (64) et dudit servomoteur de distribution (53).

7. Appareil selon la revendication 6, dans lequel ledit contrôleur (30) a un axe des temps virtuel (60) auquel les servomoteurs (28, 53, 64) synchronisés sont asservis en esclave par l'intermédiaire de cames électroniques respectives programmées dans le contrôleur (30).

8. Appareil selon la revendication 6 ou 7, dans lequel ledit contrôleur (30) est programmé pour réaliser des profils de came électronique qui définissent des accélérations, des décélérations, et des retards des servomoteurs (28, 53, 64).

9. Appareil selon l'une quelconque des revendications 6 à 8, dans lequel ledit contrôleur (30) est programmé pour réaliser des embrayages électroniques agencés pour mettre fin au fonctionnement des servomoteurs (28, 53, 64) en réponse à des valeurs d'entrée de capteur inacceptables prédéterminées de l'un quelconque ou de plusieurs paramètres sélectionnés dans le groupe consistant en une pression d'air, une pression de vide, une puissance électrique, un état de défaut de divers composants de l'appareil, une quantité de produit restant dans des réservoirs, et des températures de dispositif de chauffage.

10. Appareil selon l'une quelconque des revendications 6 à 8, et comprenant en outre un capteur de détection de préchargement (71) agencé pour détecter là présence dudit article (12) à une position de préchargement sur ledit dispositif de chargement (18), dans lequel ledit contrôleur (30) est programmé pour comprendre un embrayage électronique agencé pour empêcher le fonctionnement dudit servomoteur de chargement (28) en réponse à une indication fournie par ledit capteur de détection de préchargement (71) indiquant qu'aucun article (12) n'est présent à ladite position de préchargement.

11. Appareil selon la revendication 9 ou 10 telle que jointe à la revendication 7 telle que jointe à la revendication 6, dans lequel ledit contrôleur (30) est programmé pour désactiver le ou les embrayages électroniques, retirer une alimentation des servomoteurs (28, 53, 64), et arrêter l'axe des temps virtuel (60) en réponse à une condition dangereuse détectée ou à une commande d'arrêt.

12. Appareil selon l'une quelconque des revendications 6 à 11, et inclus dans une machine de formation de conteneur qui comprend d'autres dispositifs qui effectuent d'autres fonctions et qui sont entraînés par d'autres servomoteurs respectifs, ledit appareil comprenant en outre un capteur de détection de position de repos (72) agencé pour détecter la présence de ladite chargeuse (24) à une position de repos souhaitée, dans lequel ledit contrôleur (30) est programmé pour ramener à la position de repos ledit servomoteur de chargement (28), ledit servomoteur de distribution (53) et ledit servomoteur de réception (64) ainsi que lesdits autres servomoteurs en arrêtant le servomoteur de chargement (28) lorsqu'il se déplace en avant et lorsque ledit capteur de détection de position de repos (72) détecte la présence de ladite chargeuse (24) à ladite position de repos souhaitée, et en déplaçant ledit servomoteur de distribution (53) et ledit servomoteur de réception (64) à des positions prédéterminées décalées par rapport audit servomoteur de chargement (28).

13. Appareil selon l'une quelconque des revendications 6 à 12, et comprenant en outre un dispositif de rétroaction (74) qui sert à informer ledit contrôleur (30) quant à la position dudit servomoteur de chargement (28).

14. Appareil selon la revendication 13, dans lequel ledit dispositif de rétroaction (74) comprend un encodeur (74) connecté audit contrôleur (30), ledit appareil comprenant en outre une batterie de secours (76) connectée audit encodeur (74) et agencée pour alimenter l'encodeur (74) à chaque fois qu'une source principale de puissance électrique ne peut pas alimenter l'encodeur (74).

15. Appareil selon l'une quelconque des revendications 6 à 14, dans lequel ledit appareil comprend en outre un dispositif (80) qui est connecté audit servomoteur de chargement (28) et qui est amené par ledit contrôleur (30) à émettre un train d'impulsions pour commander le fonctionnement dudit servomoteur de chargement (28).

16. Appareil selon l'une quelconque des revendications précédentes, dans lequel ladite chargeuse (24) comprend du polyéthylène à poids moléculaire très élevé.

17. Procédé comprenant les étapes consistant à avancer une chargeuse (24) le long d'un trajet sans fin dans une région dans laquelle un deuxième trajet s'étend et amener ladite chargeuse (24) à délivrer un article (12) à un récepteur (14) situé sur ledit deuxième trajet dans ladite région, ramener momentanément ladite chargeuse (24) en-dehors de ladite région immédiatement à la suite de la distribution dudit article (12) audit récepteur (14), et avancer ledit récepteur (14) le long dudit deuxième trajet.

18. Procédé selon la revendication 17, dans lequel ledit article (12) est un conteneur partiellement formé (12) qui, lorsqu'il est délivré par ladite chargeuse (24), a de ce fait été reçu sur ledit récepteur (14) qui est sous la forme d'un mandrin (14).

19. Procédé selon la revendication 17 ou 18, et comprenant en outre l'étape consistant à amener un contrôleur (30) programmé de manière appropriée à commander un servomoteur de chargement (28) pour avancer un transporteur sans fin (18) jusqu'à ce que ladite chargeuse (24) qui est supportée par ledit transporteur (18) ait propulsé ledit article (12) le long d'un trajet de chargement (20) et sur ledit récepteur (14) et à commander ledit servomoteur de chargement (28) pour inverser ledit transporteur (18) une fois que ladite chargeuse (24) a propulsé ledit article (12) sur ledit récepteur (14).

20. Procédé selon la revendication 19, et comprenant en outre l'étape consistant à amener le contrôleur (30) programmé de manière appropriée à commander ledit transporteur (18) pour débuter l'inversion et ensuite à commander ledit récepteur (14) pour qu'il avance le long dudit deuxième trajet.

21. Procédé selon la revendication 19 ou 20, et comprenant en outre les étapes consistant à distribuer ledit article (12) audit transporteur sans fin (18) avant de propulser ledit article (12) le long dudit trajet de chargement (20), et amener le contrôleur (30) programmé de manière appropriée à synchroniser le fonctionnement dudit servomoteur de chargement (28) avec au moins l'un d'un servomoteur de réception (64) et d'un servomoteur de distribution (53).

22. Procédé selon la revendication 21, et comprenant en outre l'étape consistant à amener ledit contrôleur (30) à fournir un axe des temps virtuel (60) et à asservir en esclave les servomoteurs (28, 53, 64) audit axe des temps virtuel (60) par l'intermédiaire de cames électroniques (75, 77, 79) respectives programmées dans le contrôleur (30).

23. Procédé selon l'une quelconque des revendications 19 à 22, et comprenant en outre l'étape consistant à amener le contrôleur (30) programmé de manière appropriée à réaliser un profil de came de chargeuse électronique qui définit des accélérations, des décélérations, et des temps de retard dudit servomoteur de chargement (28).

24. Procédé selon l'une quelconque des revendications 19 à 23, et comprenant en outre l'étape consistant à amener ledit contrôleur (30) programmé de manière appropriée à réaliser des embrayages électroniques et utiliser lesdits embrayages pour mettre fin au fonctionnement des servomoteurs (28, 53, 64) en réponse à des valeurs d'entrée de capteur inacceptables prédéterminées de l'un quelconque ou de plusieurs paramètres sélectionnés dans le groupe consistant en une pression d'air, une pression de vide, une puissance électrique, un état de défaut de divers composants de machine, une quantité de produit restant dans des réservoirs, et des températures de dispositif de chauffage.

25. Procédé selon l'une quelconque des revendications 19 à 24, et comprenant en outre l'étape consistant à amener le contrôleur (30) programmé de manière appropriée à réaliser un embrayage électronique et utiliser ledit embrayage pour empêcher le fonctionnement dudit servomoteur de chargement (28) en réponse à une indication qu'aucun carton (12) n'est présent à une position de préchargement.

26. Procédé selon l'une quelconque des revendications 19 à 25, et comprenant en outre l'étape consistant à amener le contrôleur (30) programmé de manière appropriée à désactiver le ou les embrayages électroniques, retirer une alimentation du ou des servomoteurs (28, 53, 64), et arrêter l'axe des temps virtuel (60) en réponse à une condition dangereuse détectée ou une commande d'arrêt.

27. Procédé selon la revendication 21 ou 22, ou l'une quelconque des revendications 23 à 26 telles que jointes à la revendication 21, et comprenant en outre l'étape consistant à amener le contrôleur (30) programmé de manière appropriée à ramener à la position de repos les servomoteurs (28, 53, 64) en arrêtant le servomoteur de chargement (28) lorsqu'il se déplace en avant et lorsque la présence de ladite chargeuse (24) à une position de repos souhaitée est détectée et en déplaçant ledit servomoteur de distribution (53) et ledit servomoteur de réception (64) à des positions prédéterminées décalées par rapport à ladite position de repos souhaitée, et à ramener à la position de repos d'autres servomoteurs d'une machine de formation de conteneur (11) comprenant ledit récepteur (14), ladite chargeuse (24), ledit servomoteur de chargement (28), ledit contrôleur (30), ledit servomoteur de distribution (53) et ledit servomoteur de réception (64).

28. Procédé selon l'une quelconque des revendications 19 à 27, et comprenant en outre l'étape consistant à renvoyer audit contrôleur (30) la position dudit servomoteur de chargement (28).
